# FASCICULE DE BREVET EUROPEEN

(11) **EP 3 593 270 B1**
(45) Date de publication et mention de la délivrance du brevet: **18.08.2021**
(21) Numéro de dépôt: 18706786.3
(22) Date de dépôt: 26.01.2018
(51) Int. Cl.: G06F 21/44

(54) **PROCÉDÉ D'ACCÈS A UNE RESSOURCE INFORMATIQUE SÉCURISÉE PAR UNE APPLICATION INFORMATIQUE**
VERFAHREN ZUM ZUGRIFF AUF EINE SICHERE COMPUTERRESSOURCE DURCH EINE COMPUTERANWENDUNG
METHOD FOR ACCESSING A SECURE COMPUTER RESOURCE BY A COMPUTER APPLICATION

(30) Priorité: 10.03.2017 FR 1752004
(43) Date de publication de la demande: 15.01.2020
(73) Titulaire: Wallix, 75008 Paris (FR)
(72) Inventeur: ADDA, Serge, 92160 Antony (FR)
(74) Mandataire: IP Trust
(86) Numéro de dépôt international: PCT/FR2018/050183
(87) Numéro de publication internationale: WO 2018/162810

(56) Documents cités:
- WO-A1-2016/199166
- Anonymous: "Credential Manager A2A - CA Privileged Access Manager - 2.7", , 14 février 2017 (2017-02-14), XP055411158, Extrait de l'Internet: URL:https://docops.ca.com/ca-privileged-ac cess-manager/2-7/EN/introduction/credentia l-manager-overview/credential-manager-a2a/ #CredentialManagerA2A-A2ASecurityModel [extrait le 2017-09-28]
- Ca Technologies: "A2A Client Connection Security - CA Privileged Access Manager - 2.8.1", CA Technologies Documentation, 28 décembre 2016 (2016-12-28), XP055411576, Extrait de l'Internet: URL:https://docops.ca.com/ca-privileged-ac cess-manager/2-8-1/EN/implementing/add-and -run-credential-manager-a2a-requestors/a2a -client-connection-security [extrait le 2017-09-29]

## Description

### Domaine de l'invention

La présente invention concerne le domaine de l'accès à une ressource informatique sécurisée par une application informatique dépourvue d'interaction homme-machine et plus particulièrement la gestion des mots de passe d'application à application.

Elle concerne par exemple l'accès à des applications informatiques hébergées sur une plate-forme applicative de type « WebSphere Application Server » (nom commercial). A titre d'exemple, il s'agit de l'accès à des applications hébergées sur une plate-forme WebSphere (nom commercial d'IBM) proposant un ensemble de solutions développées qui permettent de développer, de déployer et d'utiliser des applications d'entreprise, même dans des cas complexes faisant appel à des applications et des matériels hétérogènes.

Beaucoup d'applications, de services Web et de solutions logicielles requièrent l'accès à des ressources telles que des bases de données ou des serveurs de fichiers par exemple. L'accès à ces ressources nécessite une authentification, le plus souvent au moyen d'un nom de compte et d'un mot de passe.

Pour automatiser un tel processus de communication, une solution consiste à inclure les informations d'identification de l'application en texte clair dans les fichiers de configuration et les scripts.

Les administrateurs ont généralement de la difficulté à identifier, modifier et gérer ces mots de passe et de ce fait les mots de passe restent statiques et inchangés, ce qui crée des failles de sécurité.

Par conséquent, les pouvoirs restent inchangés, ce qui peut conduire à un accès non autorisé aux systèmes sensibles. Ainsi, les références de codage dur peuvent rendre les travaux des techniciens plus faciles, mais c'est aussi un point de lancement facile pour les pirates informatiques.

### Etat de la technique

Différentes solutions ont été proposées dans l'art antérieur, pour automatiser la gestion des mots de passe dans des contextes « application vers application ».

Le brevet américain US7823192 décrit une solution qui permet aux applications sécurisées disparates de communiquer directement avec autre application dans un environnement applicatif hétérogène, en prévoyant la création de jetons qui peuvent être transmis entre les applications sans intervention humaine.

Dans ce document de l'art antérieur, les informations de sécurité sont passées entre les applications sous la forme d'un jeton avec un type de données chaîne qui peut être reconnu par un grand nombre d'applications. Le jeton n'a pas d'entête et donc aucune configuration d'en-tête spécifique à l'application, ce qui en fait une plate-forme indépendante. Ceci élimine la nécessité d'une conversion d'informations de sécurité entre les différents formats. L'utilisation de jetons élimine également la nécessité d'une demande d'authentification et d'autorisation à chaque fois qu'il envoie un message à une autre application. Au lieu d'un contexte permanent ou session, un contexte est créé avec chaque invocation d'une application à une autre.

On connaît aussi la demande de brevet européen EP2122526 décrivant une autre solution pour gérer des justificatifs d'identité, comprenant :
- un module d'interception configuré pour intercepter un processus de justificatifs d'identité lors de la réception de la demande par une application
- un module de configuration/paramétrage configuré pour lire des configurations et paramétrages de système afin de gérer des justificatifs d'identité d'application
- un module d'association de justificatifs d'identité configuré pour appliquer une logique d'association de justificatifs d'identité sur la base des configurations et paramétrages du système.

Le brevet américain US9160545 décrit une autre solution d'accès sécurisé « applications à application » (A2A) et « application de base de données (A2DB) ».

Ce procédé prévoit la réception d'une requête d'enregistrement à un premier dispositif numérique d'une première demande, la réception d'un premier facteur de programme associé à la première application, ce qui confirme le premier élément de programme, la génération d'un premier mot de passe pour une seconde application à base d'au moins sur la confirmation du premier élément de programme, et fournir le premier mot de passe à un second élément numérique. En outre, le document "Credential Manager A2A - CA Privileged Access Manager 2.7" constitue aussi un document d'art antérieur pertinent.

### Inconvénients de l'art antérieur

Les solutions de l'art antérieur ne sont pas totalement satisfaisantes.

La solution proposée par le brevet US7823192 présente l'inconvénient de devoir modifier l'ensemble des applications informatiques cibles hébergées, ce qui souvent n'est pas possible, notamment lorsqu'on ne dispose pas du code source de l'application hébergée.

Ces solutions sont par ailleurs partielles, car elles ne proposent pas de solutions pour protéger les données de connexion et d'authentification.

Enfin, la solution proposée par le brevet US9160545 prévoit calcule une clé chiffrée transmise à l'application hébergée cible. Cette solution ne prévoit pas la sécurisation de la clé d'authentification originelle, ce qui implique une grande complexité d'administration, notamment en cas de changement de clé d'authentification de l'application hébergée, par exemple en cas de modification de l'application cible hébergée ou d'installation sur le serveur d'une nouvelle version de l'application.

### Solution apportée par l'invention

Afin de remédier à ces inconvénients, l'invention concerne selon son acception la plus générale un procédé d'accès à une ressource informatique sécurisée par une application informatique dépourvue d'interaction homme-machine pour la saisie d'une information d'authentification, comportant :
a) une première étape d'initialisation comprenant :
   a1) la création d'une clé cryptographique transitoire (non enregistrée dans une mémoire permanente) consistant à appliquer un traitement cryptographique à une pluralité d'informations invariantes dans le temps, et représentatives de l'environnement informatique d'exécution de ladite application et à enregistrer le résultat de ce traitement
   a2) le chiffrement avec la clé ainsi calculée les données d'authentification d'un compte autorisé à accéder à un coffre-fort à mots de passe
   a3) l'enregistrement dans une mémoire permanente associée à l'application le résultat de ce chiffrement (Fichier crédentiel)
b) des étapes d'accès automatique par ladite application à ladite ressource informatique sécurisée consistant à :
   b1) Créer une clé cryptographique transitoire (non enregistrée dans une mémoire permanente) consistant à appliquer un traitement cryptographique à ladite pluralité d'informations invariantes dans le temps, et représentatives de l'environnement informatique d'exécution de ladite application et à enregistrer le résultat de ce traitement
   b2) lire le fichier crédentiel créé lors de l'étape d'initialisation et à déchiffrer ledit fichier crédentiel avec ladite clé cryptographique transitoire calculée à l'étape précédente
      et
   b3) lors de la première exécution du procédé après l'étape d'initialisation,
      b3-1) à requérir auprès dudit coffre-fort par une identification à partir dudit fichier crédentiel, pour extraire les informations d'authentification nécessaire à l'accès à ladite ressource informatique
      b3-2) à calculer une empreinte du contexte d'appel de l'application en fonction de données invariantes représentatives de ce contexte
      b3-3) à enregistrer ladite empreinte sous une forme chiffrée dans une mémoire permanente associée à l'application le résultat de ce calcul
      b3-4) à transférer à l'application appelante les données provenant de ladite ressource informatique
   b4) lors des exécutions suivantes,
      b4-1) à requérir auprès dudit coffre-fort par une identification à partir dudit fichier crédentiel, pour extraire les informations d'authentification nécessaire à l'accès à ladite ressource informatique
      b4-2) à calculer une empreinte du contexte d'appel de l'application en fonction de données invariantes représentatives de ce contexte
      b4-3) comparer l'empreinte calculée avec l'empreinte enregistrée dans la mémoire locale et
      b4-4a) en cas de différence, refuser le transfert des données à l'application appelante
      b4-4b) en cas de conformité, à transférer à l'application appelante les données provenant de ladite ressource informatique.

Selon une première variante, ladite empreinte est calculée en fonction de données numériques comprenant le chemin d'accès à l'exécutable de l'application, le hash du code binaire de l'exécutable, l'identité sous laquelle tourne le processus de l'application,

Selon une deuxième variante, l'application est exécutée par un interpréteur ou une machine virtuelle, et en ce que ladite empreinte est calculée en fonction de données obtenues par l'analyse de la ligne de commande du process et recherche du fichier correspondant au script ou au pseudo-code de l'application et le calcul du hash dudit pseudo-code.

Selon une troisième variante, l'empreinte et les données extraites du coffre-fort sont enregistrées dans une mémoire permanente locale sous forme cryptée dans un cache local.

Selon un mode de mise en œuvre particulier, l'empreinte et les données extraites du coffre-fort numérique sont protégées par une technique d'offuscation.

Selon une première variante, la technique d'offuscation statique consiste à supprimer le registre frame pointer ou à remplacer des constantes du programme par des calculs récursifs.

Selon une deuxième variante, la technique d'offuscation dynamique consiste à bloquer l'accès en cas de détection d'une opération de débogage.

L'invention concerne aussi un procédé d'initialisation d'un processus d'accès à une ressource informatique sécurisée par une application informatique dépourvue d'interaction homme-machine pour la saisie d'une information d'authentification, conforme à la revendication 1 ainsi qu'un procédé d'accès automatique par ladite application à ladite ressource informatique sécurisée conforme au procédé d'accès précité.

### Description détaillée d'un exemple non limitatif de réalisation

La présente invention sera mieux comprise à la lecture de la description détaillée d'un exemple non limitatif de l'invention qui suit, se référant aux dessins annexés où :
- la figure 1 représente une vue schématique fonctionnelle du contexte de l'invention
- la figure 2 représente une vue schématique fonctionnelle du processus d'initialisation
- la figure 3 représente une vue schématique fonctionnelle de l'invention.

### Contexte de l'invention

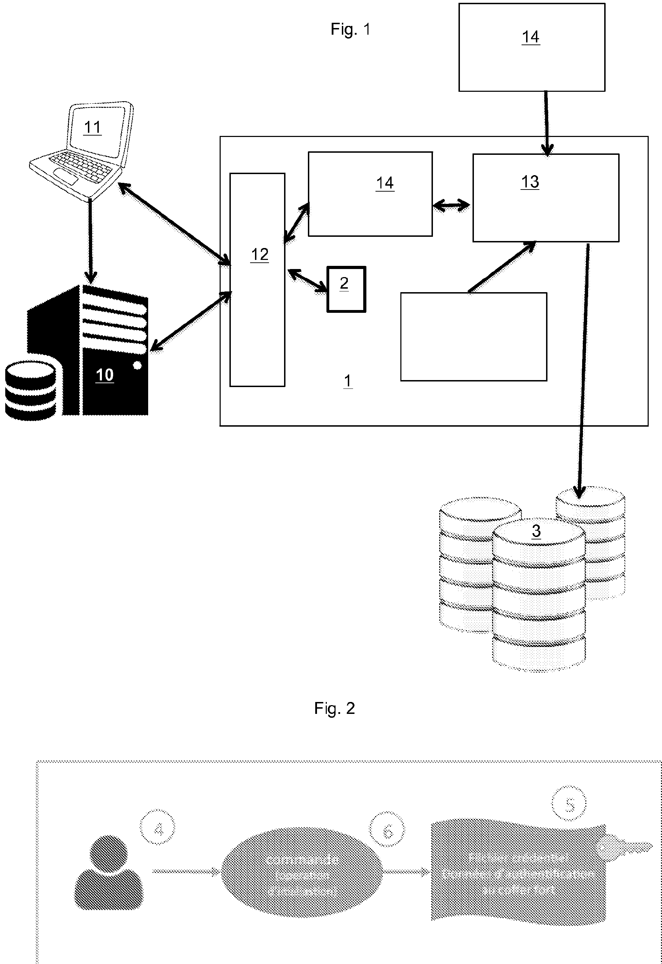

La figure 1 représente une vue schématique du fonctionnement d'une solution d'accès par des applications hébergées par WebSphere (nom commercial) à des ressources telle qu'une base de données.

Un ordinateur client (11) sur lequel est installée une application de type navigateur internet communique avec un serveur Web externe (10) (Apache, Nginx, IHS ..) en utilisant le protocole de communication de base HTTP(S) afin d'envoyer des requêtes (connexion au serveur, page d'accueil..).

Ces requêtes sont dirigées vers le serveur Web interne (12) d'un serveur d'application (1) et ce dernier les dirige vers un conteneur Web (13). Le navigateur (11) peut se connecter directement au serveur interne. Dans l'exemple décrit, le serveur d'application (1) est isolé et les connexions se font à travers le serveur Web externe (10).

Le conteneur Web (14) contient les Servlets et les JSPs (JPS contient les pages Web dynamique, Et Servlets pour créer dynamiquement des données) et se connecter quand il en a besoin à une application ou une base de données (3).

Les composants logiciels EJB qui sont dans le conteneur (13) peuvent communiquer avec la base de données (3) afin de récupérer, modifier, supprimer des données, etc... L'interface JDBC assure la connexion à n'importe quelle base de données Oracle, Mysql,....

Les clients Webservice comme les applications mobiles/tablettes peuvent accéder au serveur d'application en utilisant le protocole SOAP encapsulé dans le protocole HTTP et passé directement à travers le serveur HTTP interne

Un client Java pur (14) peut se connecter directement au conteneur EJB (13) en utilisant les protocoles EMI/IIOP.

L'application (1) exécutée sur un serveur distant (10) lit les informations dans un fichier de configuration (2) qui est enregistré sur le même serveur distant, pour se connecter à une base de données (3) locale, ou distante sur le même serveur ou un serveur tiers.

### Schéma de fonctionnement

Le procédé d'accès selon l'invention se décompose en trois parties :
- un processus d'initialisation
- un processus d'accès lors d'une première exécution
- un processus d'accès pour les exécutions suivantes.

### Processus d'initialisation

Ce processus illustré par la figure 2 consiste à calculer clé cryptographique transitoire par l'exécution d'un code informatique sur le serveur Websphère hébergeant la ressource cible, par exemple une application hébergée.

L'utilisateur (4) lance la commande correspondant à l'exécution du procédé objet de l'invention.

Cette exécution commande l'étape d'initialisation.

Cette étape consiste à demander à l'utilisateur de saisir les données d'authentification nécessaire pour l'accès à un coffre-fort numérique dans lequel sont enregistrées les données d'authentification aux ressources hébergées auxquelles l'application du serveur Websphere (nom commercial) doit accéder. Le coffre-fort numérique est enregistré sur un équipement distant, par exemple un boîtier physique ou virtuel.

La commande (6) récupère la ou les données d'authentification et les chiffre en appliquant un algorithme cryptographique.

A cet effet, la commande déclenche le calcul d'une clé transitoire utilisant des paramètres correspondant à des données invariantes caractérisant l'environnement d'exécution de la commande. Il s'agit par exemple :
- du nom ou l'identifiant de l'ordinateur sur lequel est exécutée la commande
- du nom de la commande
- du condensat du code exécutable de cette commande
- de l'identifiant du propriétaire de l'exécutable

Les données d'authentification sont chiffrées avec la clé transitoire ainsi calculée, et enregistrées sur le serveur WebSphere dans un fichier crédentiel (5).

### Premier accès à la ressource hébergée

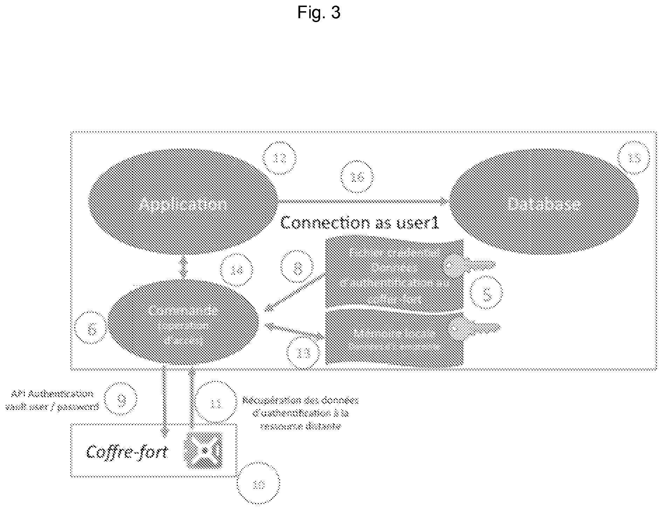

La figure 3 illustre le processus d'accès à la ressource hébergée.

Le lancement de la commande (6) par le serveur Websphre en mode de premier accès provoque l'exécution d'une étape de récupération dans le fichier crédentiel (5) des données d'authentification permettant d'accéder à la ressource, sous une forme chiffrée.

La commande (6) lance ensuite une étape de déchiffrement (8) des données d'authentification chiffrées par l'algorithme de déchiffrement basé sur les mêmes paramètres invariants que ceux qui ont permis le calcul de la clé de chiffrement lors de l'étape d'initialisation.

La commande lance ensuite une étape (9) d'accès au coffre numérique (10) contenant les données d'authentification à la ressource distante (11) et de calcul de l'empreinte de l'application (12) appelante.

On chiffre ensuite les données d'authentification à la ressource distante (11) et l'empreinte de l'application (12) appelante avec la clé utilisée pour le chiffrement du fichier crédentiel, et en enregistre les données ainsi chiffrées dans une mémoire locale (13) sur l'ordinateur sur lequel est exécutée l'application Websphère.

La dernière étape (14) consiste à fournir les données d'authentification (11) à l'application (12), pour permettre l'accès (16) à la ressource distante (15).

### Accès ultérieur à la ressource hébergée

Les accès ultérieurs mettent en œuvre les mêmes étapes, à l'exception de l'étape précédant l'étape (14). L'empreinte de l'application (12) étant déjà enregistrée dans la mémoire locale (13) lors de l'accès initial, on compare cette empreinte déjà enregistrée avec celle nouvellement calculée.

Si les deux empreintes diffèrent, le traitement est interrompu et envoie un message d'erreur.

Sinon, le processus se poursuit par l'étape (14) consistant à fournir les données d'authentification (11) à l'application (12), pour permettre l'accès (16) à la ressource distante (15).

### Indisponibilité du coffre fort (10)

Dans le cas où l'accès au coffre-fort (10) n'est pas possible, on utilise les données d'authentification déjà enregistrées dans la mémoire locale (13) sans mise à jour.

## Revendications

1. Procédé d'accès à une ressource informatique sécurisée (3) par une application informatique (1) dépourvue d'interaction homme-machine pour la saisie d'une information d'authentification, comportant :
a) une première étape d'initialisation comprenant :
a1) la création d'une clé cryptographique transitoire non enregistrée dans une mémoire permanente consistant à appliquer un traitement cryptographique à une pluralité d'informations invariantes dans le temps, et représentatives de l'environnement informatique d'exécution de ladite application et à enregistrer le résultat de ce traitement
a2) le chiffrement avec la clé ainsi calculée les données d'authentification d'un compte autorisé à accéder à un coffre-fort à mots de passe
a3) l'enregistrement dans une mémoire permanente associée à l'application le résultat de ce chiffrement, dit fichier crédentiel
b) des étapes d'accès automatique par ladite application à ladite ressource informatique sécurisée consistant à :
b1) Créer une clé cryptographique transitoire non enregistrée dans une mémoire permanente consistant à appliquer un traitement cryptographique à ladite pluralité d'informations invariantes dans le temps, et représentatives de l'environnement informatique d'exécution de ladite application et à enregistrer le résultat de ce traitement
b2) lire le fichier crédentiel créé lors de l'étape d'initialisation et à déchiffrer ledit fichier crédentiel avec ladite clé cryptographique transitoire calculée à l'étape précédente
et
b3) lors de la première exécution du procédé après l'étape d'initialisation,
b3-1) à requérir auprès dudit coffre-fort par une identification à partir dudit fichier crédentiel, pour extraire les informations d'authentification nécessaire à l'accès à ladite ressource informatique
b3-2) à calculer une empreinte du contexte d'appel de l'application en fonction de données invariantes représentatives de ce contexte
b3-3) à enregistrer ladite empreinte sous une forme chiffrée dans une mémoire permanente associée à l'application le résultat de ce calcul
b3-4) à transférer à l'application appelante les données provenant de ladite ressource informatique
b4) lors des exécutions suivantes,
b4-1) à requérir auprès dudit coffre-fort par une identification à partir dudit fichier crédentiel, pour extraire les informations d'authentification nécessaire à l'accès à ladite ressource informatique
b4-2) à calculer une empreinte du contexte d'appel de l'application en fonction de données invariantes représentatives de ce contexte
b4-3) comparer l'empreinte calculée avec l'empreinte enregistrée dans la mémoire locale et
b4-4a) en cas de différence, refuser le transfert des données à l'application appelante
b4-4b) en cas de conformité, à transférer à l'application appelante les données provenant de ladite ressource informatique.

2. Procédé selon la revendication 1, dans lequel ladite empreinte est calculée en fonction de données numériques comprenant le chemin d'accès à l'exécutable de l'application, le hash du code binaire de l'exécutable, l'identité sous laquelle tourne le processus de l'application,

3. Procédé selon la revendication 1, dans lequel l'application est exécutée par un interpréteur ou une machine virtuelle, et en ce que ladite empreinte est calculée en fonction de données obtenues par l'analyse de la ligne de commande du process et recherche du fichier correspondant au script ou au pseudo-code de l'application et le calcul du hash dudit pseudo-code.

4. Procédé selon la revendication 1, dans lequel l'empreinte et les données extraites du coffre-fort numérique sont protégées par une technique d'offuscation.

5. Procédé selon la revendication 4, dans lequel la technique d'offuscation statique consiste à supprimer le registre frame pointer.

6. Procédé selon la revendication 4, dans lequel la technique d'offuscation statique consiste à remplacer des constantes du programme par des calculs récursifs.

7. Procédé selon la revendication 5, dans lequel la technique d'offuscation dynamique consiste à bloquer l'accès en cas de détection d'une opération de débogage.

8. Procédé d'initialisation d'un processus d'accès à une ressource informatique sécurisée par une application informatique dépourvue d'interaction homme-machine pour la saisie d'une information d'authentification, conforme à la revendication 1, comportant :
a) une première étape d'initialisation comprenant :
a1) la création d'une clé cryptographique transitoire non enregistrée dans une mémoire permanente consistant à appliquer un traitement cryptographique à une pluralité d'informations invariantes dans le temps, et représentatives de l'environnement informatique d'exécution de ladite application et à enregistrer le résultat de ce traitement
a2) le chiffrement avec la clé ainsi calculé les données d'authentification d'un compte autorisé à accéder à un coffre-fort à mots de passe
a3) l'enregistrement dans une mémoire permanente associée à l'application le résultat de ce chiffrement, dit fichier crédentiel.

9. Procédé d'accès automatique par ladite application à ladite ressource informatique sécurisée conforme à la revendication 1, comportant :
b) des étapes d'accès automatique par ladite application à ladite ressource informatique sécurisée consistant à :
b1) Créer une clé cryptographique transitoire non enregistrée dans une mémoire permanente consistant à appliquer un traitement cryptographique à une pluralité d'informations invariantes dans le temps, et représentatives de l'environnement informatique d'exécution de ladite application et à enregistrer le résultat de ce traitement
b2) lire le fichier crédentiel créé lors de l'étape d'initialisation et à déchiffrer ledit fichier crédentiel avec ladite clé cryptographique transitoire calculée à l'étape précédente
et
b3) lors de la première exécution du procédé après l'étape d'initialisation,
b3-1) à requérir auprès dudit coffre-fort par une identification à partir dudit fichier crédentiel, pour extraire les informations d'authentification nécessaire à l'accès à ladite ressource informatique
b3-2) à calculer une empreinte du contexte d'appel de l'application en fonction de données invariantes représentatives de ce contexte
b3-3) à enregistrer ladite empreinte sous une forme chiffrée dans une mémoire permanente associée à l'application le résultat de ce calcul
b3-4) à transférer à l'application appelante les données provenant de ladite ressource informatique.

10. Procédé d'accès automatique par ladite application à ladite ressource informatique sécurisée conforme à la revendication 1, comportant :
b) des étapes d'accès automatique par ladite application à ladite ressource informatique sécurisée consistant à :
b1) Créer une clé cryptographique transitoire non enregistrée dans une mémoire permanente consistant à appliquer un traitement cryptographique à une pluralité d'informations invariantes dans le temps, et représentatives de l'environnement informatique d'exécution de ladite application et à enregistrer le résultat de ce traitement
b2) lire le fichier crédentiel créé lors de l'étape d'initialisation et à déchiffrer ledit fichier crédentiel avec ladite clé cryptographique transitoire calculée à l'étape précédente
et lors des exécutions,
b4-1) à requérir auprès dudit coffre-fort par une identification à partir dudit fichier crédentiel, pour extraire les informations d'authentification nécessaire à l'accès à ladite ressource informatique
b4-2) à calculer une empreinte du contexte d'appel de l'application en fonction de données invariantes représentatives de ce contexte
b4-3) comparer l'empreinte calculée avec l'empreinte enregistrée dans la mémoire locale et
b4-4a) en cas de différence, refuser le transfert des données à l'application appelante
b4-4b) en cas de conformité, à transférer à l'application appelante les données provenant de ladite ressource informatique.

## Patentansprüche

1. Verfahren zum Zugriff auf eine sichere Computerressource (3) durch eine Computeranwendung (1) ohne Mensch-Maschine-Interaktion zur Eingabe von Authentifizierungsinformationen, umfassend:
a) einen ersten Initialisierungsschritt, umfassend:
a1) die Erzeugung eines transienten kryptografischen Schlüssels, der nicht in einem permanenten Speicher aufgezeichnet ist, der aus dem Anwenden einer kryptografischen Verarbeitung auf eine Vielzahl von zeitinvarianten Informationen, die für die Computerumgebung der Ausführung der Anwendung repräsentativ sind, und dem Aufzeichnen des Ergebnisses dieser Verarbeitung besteht
a2) die Verschlüsselung der Authentifizierungsdaten eines zum Zugreifen auf einen Passwort-Safe berechtigten Kontos mit dem so berechneten Schlüssel
a3) die Aufzeichnung des Ergebnisses dieser Verschlüsselung in einem permanenten Speicher, der der Anwendung zugeordnet ist, das Credential-Datei genannt wird,
b) Schritte des automatischen Zugriffs durch die Anwendung auf die sichere Computerressource, bestehend aus:
b1) Erzeugen eines transienten kryptografischen Schlüssels, der nicht in einem permanenten Speicher aufgezeichnet ist, der aus dem Anwenden einer kryptografischen Verarbeitung auf die Vielzahl von zeitinvarianten Informationen, die für die Computerumgebung der Ausführung der Anwendung repräsentativ sind, und dem Aufzeichnen des Ergebnisses dieser Verarbeitung besteht
b2) Lesen der während des Initialisierungsschritts erzeugten Credential-Datei und Entschlüsseln der Credential-Datei mit dem im vorherigen Schritt berechneten transienten kryptografischen Schlüssel
und
b3) bei der ersten Ausführung des Verfahrens nach dem Initialisierungsschritt,
b3-1) Anfordern bei dem Safe durch eine Identifizierung anhand der Credential-Datei, um die Authentifizierungsinformationen abzurufen, die für den Zugriff auf die Computerressource erforderlich sind
b3-2) Berechnen eines Fingerabdrucks des Kontextes des Anwendungsaufrufs in Abhängigkeit von invarianten Daten, die für diesen Kontext repräsentativ sind
b3-3) Aufzeichnen des Fingerabdrucks in verschlüsselter Form in einem der Anwendung zugeordneten permanenten Speicher, das Ergebnis dieser Berechnung
b3-4) Übertragen der von der Computerressource stammenden Daten an die aufrufende Anwendung
b4) bei den nachfolgenden Ausführungen,
b4-1) Anfordern bei dem Safe durch Identifizierung anhand der Credential-Datei, um die Authentifizierungsinformationen abzurufen, die für den Zugriff auf die Computerressource erforderlich sind
b4-2) Berechnen eines Fingerabdrucks des Kontextes des Anwendungsaufrufs in Abhängigkeit von invarianten Daten, die für diesen Kontext repräsentativ sind
b4-3) Vergleichen des berechneten Fingerabdrucks mit dem im lokalen Speicher aufgezeichneten Fingerabdruck und
b4-4a) bei Nichtübereinstimmung Verweigern der Datenübertragung an die aufrufende Anwendung
b4-4b) im Falle der Übereinstimmung Übertragen der von der Computerressource stammenden Daten an die aufrufende Anwendung.

2. Verfahren nach Anspruch 1, wobei der Fingerabdruck in Abhängigkeit von numerischen Daten berechnet wird, die den Zugriffspfad zur ausführbaren Datei der Anwendung, den Hash des Binärcodes der ausführbaren Datei, die Kennung, unter der der Prozess der Anwendung läuft, umfassen.

3. Verfahren nach Anspruch 1, wobei die Anwendung von einem Interpreter oder einer virtuellen Maschine ausgeführt wird und der Fingerabdruck in Abhängigkeit von Daten berechnet wird, die durch die Analyse der Befehlszeile des Prozesses und Suchen nach der Datei, die dem Skript oder dem Pseudocode der Anwendung entspricht, und die Berechnung des Hashs des Pseudocodes erhalten werden.

4. Verfahren nach Anspruch 1, wobei der Fingerabdruck und die aus dem digitalen Safe abgerufenen Daten durch eine Obfuskationstechnik geschützt sind.

5. Verfahren nach Anspruch 4, wobei die statische Obfuskationstechnik darin besteht, den Register-Frame-Pointer zu unterdrücken.

6. Verfahren nach Anspruch 4, wobei die statische Obfuskationstechnik darin besteht, Konstanten des Programms durch rekursive Berechnungen zu ersetzen.

7. Verfahren nach Anspruch 5, wobei die dynamische Obfuskationstechnik darin besteht, bei Erkennung eines Debuggingvorgangs den Zugriff zu sperren.

8. Verfahren zum Initialisieren eines Prozesses zum Zugriff auf eine sichere Computerressource durch eine Computeranwendung ohne Mensch-Maschine-Interaktion zur Eingabe von Authentifizierungsinformationen nach Anspruch 1, umfassend:
a) einen ersten Initialisierungsschritt, umfassend:
a1) die Erzeugung eines transienten kryptografischen Schlüssels, der nicht in einem permanenten Speicher aufgezeichnet ist, der aus dem Anwenden einer kryptografischen Verarbeitung auf eine Vielzahl von zeitinvarianten Informationen, die für die Computerumgebung der Ausführung der Anwendung repräsentativ sind, und dem Aufzeichnen des Ergebnisses dieser Verarbeitung besteht
a2) die Verschlüsselung der Authentifizierungsdaten eines zum Zugreifen auf einen Passwort-Safe berechtigten Kontos mit dem so berechneten Schlüssel
a3) die Aufzeichnung des Ergebnisses dieser Verschlüsselung in einem permanenten Speicher, der der Anwendung zugeordnet ist, das Credential-Datei genannt wird.

9. Verfahren zum automatischen Zugriff durch die Anwendung auf die sichere Computerressource nach Anspruch 1, umfassend:
b) Schritte des automatischen Zugriffs durch die Anwendung auf die sichere Computerressource, bestehend aus:
b1) Erzeugen eines transienten kryptografischen Schlüssels, der nicht in einem permanenten Speicher aufgezeichnet ist, der aus dem Anwenden einer kryptografischen Verarbeitung auf eine Vielzahl von zeitinvarianten Informationen, die für die Computerumgebung der Ausführung der Anwendung repräsentativ sind, und dem Aufzeichnen des Ergebnisses dieser Verarbeitung besteht
b2) Lesen der während des Initialisierungsschritts erzeugten Credential-Datei und Entschlüsseln der Credential-Datei mit dem im vorherigen Schritt berechneten transienten kryptografischen Schlüssel
und
b3) bei der ersten Ausführung des Verfahrens nach dem Initialisierungsschritt,
b3-1) Anfordern bei dem Safe durch eine Identifizierung anhand der Credential-Datei, um die Authentifizierungsinformationen abzurufen, die für den Zugriff auf die Computerressource erforderlich sind
b3-2) Berechnen eines Fingerabdrucks des Kontextes des Anwendungsaufrufs in Abhängigkeit von invarianten Daten, die für diesen Kontext repräsentativ sind
b3-3) Aufzeichnen des Fingerabdrucks in verschlüsselter Form in einem der Anwendung zugeordneten permanenten Speicher, das Ergebnis dieser Berechnung
b3-4) Übertragen der von der Computerressource stammenden Daten an die aufrufende Anwendung.

10. Verfahren zum automatischen Zugriff durch die Anwendung auf die sichere Computerressource nach Anspruch 1, umfassend:
b) Schritte des automatischen Zugriffs durch die Anwendung auf die sichere Computerressource, bestehend aus:
b1) Erzeugen eines transienten kryptografischen Schlüssels, der nicht in einem permanenten Speicher aufgezeichnet ist, der aus dem Anwenden einer kryptografischen Verarbeitung auf eine Vielzahl von zeitinvarianten Informationen, die für die Computerumgebung der Ausführung der Anwendung repräsentativ sind, und dem Aufzeichnen des Ergebnisses dieser Verarbeitung besteht
b2) Lesen der während des Initialisierungsschritts erzeugten Credential-Datei und Entschlüsseln der Credential-Datei mit dem im vorherigen Schritt berechneten transienten kryptografischen Schlüssel
und während der Ausführungen,
b4-1) Anfordern bei dem Safe durch Identifizierung anhand der Credential-Datei, um die Authentifizierungsinformationen abzurufen, die für den Zugriff auf die Computerressource erforderlich sind
b4-2) Berechnen eines Fingerabdrucks des Kontextes des Anwendungsaufrufs in Abhängigkeit von invarianten Daten, die für diesen Kontext repräsentativ sind
b4-3) Vergleichen des berechneten Fingerabdrucks mit dem im lokalen Speicher aufgezeichneten Fingerabdruck und
b4-4a) bei Nichtübereinstimmung Verweigern der Datenübertragung an die aufrufende Anwendung
b4-4b) im Falle der Übereinstimmung Übertragen der von der Computerressource stammenden Daten an die aufrufende Anwendung.

## Claims

1. Method for accessing a secure IT resource (3) by an IT application (1) devoid of human-machine interaction for entering authentication information, comprising:
a) a first initialization step comprising:
a1) creating a transient cryptographic key not recorded in a permanent memory, consisting of applying cryptographic processing to information that is invariant in time and representative of the IT environment for executing said application, and of recording the result of this processing
a2) encrypting the authentication data of an account authorized to access a password safe using the key thus calculated
a3) recording the result of this encryption, called a credential file, in a permanent memory associated with the application
b) steps of automatically accessing said secure IT resource by said application, consisting of:
b1) creating a transient cryptographic key not recorded in a permanent memory, consisting of applying cryptographic processing to said information that is invariant in time and representative of the IT environment for executing said application, and of recording the result of this processing
b2) reading the credential file created during the initialization step and decrypting said credential file using said transient cryptographic key calculated in the previous step
and
b3) during the first execution of the method after the initialization step,
b3-1) requesting from said safe, by identification from said credential file, to extract the authentication information necessary to access said IT resource
b3-2) calculating a fingerprint of the application call context according to invariant data that are representative of this context
b3-3) recording said fingerprint in an encrypted form in a permanent memory associated with the application the result of this calculation
b3-4) transferring the data from said IT resource to the calling application
b4) during the following executions,
b4-1) requesting from said safe, by identification from said credential file, to extract the authentication information necessary to access said IT resource
b4-2) calculating a fingerprint of the application call context according to invariant data that are representative of this context
b4-3) comparing the calculated fingerprint with the fingerprint recorded in the local memory and
b4-4a) in the event of a difference, refusing the transfer of data to the calling application
b4-4b) in the event of compliance, transferring the data from said IT resource to the calling application.

2. Method according to claim 1, wherein said fingerprint is calculated according to digital data comprising the path to the executable of the application, the hash of the binary code of the executable, the identity under which the application process runs.

3. Method according to claim 1, wherein the application is executed by an interpreter or a virtual machine, and in that said fingerprint is calculated according to data obtained by analyzing the command line of the process and searching for the file corresponding to the script or pseudocode of the application and calculating the hash of said pseudocode.

4. Method according to claim 1, wherein the fingerprint and data extracted from the digital safe are protected by an obfuscation technique.

5. Method according to claim 4, wherein the static obfuscation technique consists of removing the frame pointer register.

6. Method according to claim 4, wherein the static obfuscation technique consists of replacing constants of the program with recursive calculations.

7. Method according to claim 5, wherein the dynamic obfuscation technique consists of blocking access if a debugging operation is detected.

8. Method for initializing a process for accessing a secure IT resource by an IT application devoid of human-machine interaction for entering authentication information, according to claim 1, comprising:
a) a first initialization step comprising:
a1) creating a transient cryptographic key not recorded in a permanent memory, consisting of applying cryptographic processing to information that is invariant in time and representative of the IT environment for executing said application, and of recording the result of this processing
a2) encrypting, using the key thus calculated, the authentication data of an account authorized to access a password safe
a3) recording the result of this encryption, called a credential file, in a permanent memory associated with the application.

9. Method for automatically accessing said secure IT resource by said application, according to claim 1, comprising:
b) steps of automatically accessing said secure IT resource by said application, consisting of:
b1) creating a transient cryptographic key not recorded in a permanent memory, consisting of applying cryptographic processing to information that is invariant in time and representative of the IT environment for executing said application, and of recording the result of this processing
b2) reading the credential file created during the initialization step and decrypting said credential file using said transient cryptographic key calculated in the previous step
and
b3) during the first execution of the method after the initialization step,
b3-1) requesting from said safe, by identification from said credential file, to extract the authentication information necessary to access said IT resource
b3-2) calculating a fingerprint of the application call context according to invariant data that are representative of this context
b3-3) recording said fingerprint in an encrypted form in a permanent memory associated with the application the result of this calculation
b3-4) transferring the data from said IT resource to the calling application.

10. Method for automatically accessing said secure IT resource by said application, according to claim 1, comprising:
b) steps of automatically accessing said secure IT resource by said application, consisting of:
b1) creating a transient cryptographic key not recorded in a permanent memory, consisting of applying cryptographic processing to information that is invariant in time and representative of the IT environment for executing said application, and of recording the result of this processing
b2) reading the credential file created during the initialization step and decrypting said credential file using said transient cryptographic key calculated in the previous step
and during executions,
b4-1) requesting from said safe, by identification from said credential file, to extract the authentication information necessary to access said IT resource
b4-2) calculating a fingerprint of the application call context according to invariant data that are representative of this context
b4-3) comparing the calculated fingerprint with the fingerprint recorded in the local memory and
b4-4a) in the event of a difference, refusing the transfer of data to the calling application
b4-4b) in the event of compliance, transferring the data from said IT resource to the calling application.
